# EUROPEAN PATENT SPECIFICATION

(11) **EP 3 640 682 B1**
(45) Date of publication and mention of the grant of the patent: **29.12.2021**
(21) Application number: 18201555.2
(22) Date of filing: 19.10.2018
(51) Int. Cl.: G01T 1/24, H01L 29/78

(54) **RADIATION DETECTOR, METHOD FOR PRODUCING A RADIATION DETECTOR AND METHOD FOR OPERATING A RADIATION DETECTOR**
STRAHLUNGSDETEKTOR, VERFAHREN ZUR HERSTELLUNG EINES STRAHLUNGSDETEKTORS UND VERFAHREN ZUM BETRIEB EINES STRAHLUNGSDETEKTORS
DÉTECTEUR DE RAYONNEMENTS, PROCÉDÉ DE FABRICATION D'UN DÉTECTEUR DE RAYONNEMENTS ET PROCÉDÉ POUR FAIRE FONCTIONNER UN DÉTECTEUR DE RAYONNEMENTS

(43) Date of publication of application: 22.04.2020
(73) Proprietor: Ketek GmbH, 81737 München (DE)
(72) Inventor: ISKRA, Peter, 85579 Neubiberg (DE); VINOGRADOV, Sergey, 142190 Troitsk, Moscow (RU)
(74) Representative: Dilg, Haeusler, Schindelmann Patentanwaltsgesellschaft mbH

(56) References cited:
- EP-A1- 2 779 255
- CN-A- 107 222 190
- US-A1- 2008 211 012
- US-A1- 2015 048 413
- US-B2- 8 476 730

## Description

A radiation detector is provided. Moreover, a method for producing a radiation detector and a method for operating a radiation detector are also provided.

Documents US 8,906,728 B2 and US 8,680,639 B1 refer to radiation detectors.

Documents EP 2 779 255 A1, US 8 476 730 B2 and US 2008/0211012 A1 refer to different kinds of photodiodes.

An object to be achieved is to provide a radiation detector that has a high proportion of a sensitive area relative to an overall area.

This object is achieved by a radiation detector having the features of claim 1. Preferred further developments constitute the subject-matter of the remaining claims. Thus, the present invention is defined by the attached set of claims.

The radiation detector described herein comprises a plurality of first electrodes that have tips that penetrate into a semiconductor layer. There is a sensitive area around the tips. By arranging the tips appropriately, gaps between adjacent sensitive areas can be minimized or eliminated. As there is no, or no significant, minimal distance between adjacent sensitive areas, the radiation detector can be sensitive almost over its complete area when seen in top view.

The detector is configured to detect radiation. The radiation to be detected can be x-ray radiation, ultraviolet radiation, visible radiation or also infrared radiation. However, preferably the detector is designed for a specific wavelength range and has a maximum sensitivity in the wavelength it is specifically configured for.

The radiation detector comprises a semiconductor body. The semiconductor body is the part of the detector that is sensitive to the radiation to be detected. The semiconductor body has at least one radiation entrance face. The radiation entrance face is, for example, a main face of the semiconductor body. It is possible that only one main face or also two main faces on opposite sides of the semiconductor body are configured as radiation entrance faces. For example, the semiconductor body is based on silicon or germanium. As an alternative, or in addition, the semiconductor body could be based on a III-V compound semiconductor material or also on a II-VI compound semiconductor material.

The radiation detector comprises a plurality of first electrodes. The first electrodes can be electrically independent of one another. Preferably, the first electrodes all have the same function and are configured for the same purpose and can be of the same configuration. The first electrodes can be of a semiconductor material like polysilicon, of a metal like tungsten and/or of a transparent conductive oxide like indium tin oxide.

The radiation detector comprises one or more than one second electrodes. The at least one second electrode is, for example, of a semiconductor material, of a metal and/or of a transparent conductive oxide. It is possible that there is one common second electrode for all first electrodes or that groups of first electrodes are assigned to one of the second electrodes in each case. Moreover, there can be a one-to-one assignment of the second electrodes to the first electrodes.

Each one of the first electrodes comprises a tip or consists of a tip. The tip extends into the semiconductor body. The tip could be of one material or of a plurality of different materials, in particular of electrically conductive materials.

The penetration depth Th of the tips into the semiconductor body exceeds a maximum width Tw of the tips, that is Th > Tw. In particular, the penetration depth is at least 150% or 300% or 500% of the maximum width of the respective tips. Thus, the tips are deeper than they are wide.

The tips are configured to collect charge carriers generated in the semiconductor body by the radiation to be detected. In particular, the tips are configured to collect electrons of electron hole pairs generated by the radiation. Thus, the tips could be configured as anodes. As an alternative, the tips could be configured as cathodes. Moreover, it is possible that some of the tips are configured as anodes and other tips are configured as cathodes.

Hence, the radiation detector comprises a semiconductor body having at least one radiation entrance face. Further, the radiation detector includes a plurality of first electrodes and at least one second electrode. Each one of the first electrodes comprises a tip that extends into the semiconductor body. A penetration depth of the tips into the semiconductor body exceeds a maximum width of the tips. The tips are configured to collect charge carriers generated in the semiconductor body by the radiation to be detected.

Conventional radiation detectors like avalanche photodiodes typically comprise a plurality of cells that are fashioned in a planar manner. When seen in top view, between the cells there must be non-sensitive peripheral regions because of border effects. When the cells become small, the relative proportion of the periphery regions increases and, thus, the relative proportion of the sensitive area decreases. This problem is inherent to planar detector cells of conventional avalanche photodiodes.

With the detector design described here, no planar electrodes need to be used. Contrary to that, sensitive regions assigned to the tips could be approximately of spherical shape with an electrical field focused to the tip. As a result, the border effect can be avoided or reduced so that a high fill factor of the sensitive areas can be achieved, when seen in top view. Thus, the radiation detector described here enables a high sensitivity, for example for near infrared radiation.

The tips each comprise a pillar and a head. The pillar preferably starts at the radiation entrance face of the semiconductor body. The head terminates the pillar preferably within the semiconductor body. As an alternative, the head can penetrate through the semiconductor body, however, this is not preferred.

According to at least one embodiment, the pillar constitutes the main part of the tip along a longitudinal direction of the tip. Preferably, the longitudinal direction is perpendicular to the radiation entrance face. For example, the length of the pillar contributes to an overall length of the respective tip to at least 60% or 75% or 90%. Preferably, the length of the pillar is at most 80% or 75% of the overall length of the tip.

According to at least one embodiment, an electrical insulating layer is located directly between the pillar and the semiconductor body. Thus, only the head is in direct electrical contact with the semiconductor body and not the pillar. Due to the electrical insulation layer, it is possible that only the head is configured to collect the charge carriers generated by the radiation to be detected. It is possible that the penetration depth of the tip into the semiconductor body exceeds a maximum width of the insulation layer associated with the respective tip.

The end of the insulation layer may define an intersection between the pillar and the respective head. Otherwise, it is possible that the intersection or border between the pillar and the head is defined by the geometry of the tip itself, for example, the tip begins to broaden where the pillar terminates and the head begins.

In a first embodiment, one or some or all of the tips comprises a pillar that is narrower than the associated head. That is, the maximum width can be present at the respective head. In particular, the narrowest place of the tips is at the intersection between the pillar and the head. Starting from the intersection and running towards the radiation entrance face, the pillar might become broader.

In the first embodiment, the pillar is of cylindrical or prismatic shape.

In the first embodiment, the head is of circular shape or of elliptic shape when seen in a cross-section along the respective tip. That is, the head can be a sphere or an ellipsoid.

According to at least one embodiment, one or some or all of the tips terminates in the semiconductor body with a curvature. Preferably, a radius of curvature is at least 1% or 5% or 10% and/or at most 60% or 30% or 20% of the penetration depth Th. That is, the penetration depth is preferably significantly larger than the radius of curvature at the tips. The radius of curvature is preferably the radius of curvature at the side of the tip most distant from the main face of the semiconductor body where the respective tip has its origin.

In a second embodiment, the radiation detector further comprises one or a plurality of doped areas. Preferably, there is a one-to-one assignment between the doped areas and the tips. That is, to every tip there could be exactly one doped area. Preferably, the doped areas are located between the respective tip and the respective second electrode.

In the second embodiment, a mean doping concentration in the doped areas exceed a peak doping concentration of adjacent regions of the semiconductor body by at least a factor of 5 or by at least 1 or 2 or 3 orders of magnitude. Preferably, the doping polarity of the doped region is the same as the doping polarity of the adjacent material of the semiconductor body. In particular, both the semiconductor body and the doped area are n-doped.

In the second embodiment, a distance of the doped areas towards the tips is smaller than towards the second electrode. Hence, the doped areas can be near the respective tips. When seen in top view onto the radiation entrance face, each one of the doped areas can completely be covered by the respective tip. Otherwise, the respective doped area can laterally spread beyond the associated tip.

According to at least one embodiment, the semiconductor body is based on silicon.

According to at least one embodiment, the radiation detector is configured to detect radiation from at least a part of the near infrared wavelength range. That is, the radiation detector is in particular detective for a spectral sub-range from the range of 600 nm to 980 nm.

According to at least one embodiment, a maximum thickness of the semiconductor body between the first electrode and the second electrode is at least 0.5 µm or 1 µm or 2 µm. As an alternative or in addition, the maximum thickness is at most 50 µm or 20 µm or 10 µm. Thus, the semiconductor body between the first and second electrodes can be comparably thick.

However, the substrate itself can constitute the semiconductor body so that the maximum thickness is then a substrate thickness which could amount to several hundreds of microns, for example at least 100 µm and/or at most 1 mm.

According to at least one embodiment, an optically functional coating is provided to the semiconductor body and/or to the electrodes and/or to insulation layers applied to the semiconductor body. In particular, the optical coating is an antireflection coating. Thus, the proportion of the radiation to be detected that reaches into the semiconductor body can be increased.

According to at least one embodiment, the tips are in part or completely of a semiconductor material. Preferably, the semiconductor material of the tips is different from the semiconductor material of the semiconductor body. For example, the tips are made in part of polysilicon.

It is possible that the tips are made of a semiconductor material as well as of a metal. If a metal is used, preferably the metal constitutes a core of the respective tip so that a shell of said tip can be solely formed of one or of a plurality of semiconductor materials like polysilicon.

According to at least one embodiment, the semiconductor body continuously extends over the first electrodes so that a thickness of the semiconductor body between adjacent tips is constant. Thus, there are no trenches or recesses in the semiconductor body between adjacent tips. Hence, the semiconductor body can be free of any structuring beside the tips that penetrate into the semiconductor body and beside electrical through-contacts to electrically connect a back side of the semiconductor body with the radiation entrance face, for example.

According to at least one embodiment, each one of the first electrodes or small groups of first electrodes are surrounded by trenches. The semiconductor body has a reduced thickness or is completely removed in the area of the trenches. By such trenches, an optical insulation between the first electrodes or the groups of first electrodes can be achieved. The term "small group" in particular means that the respective group comprises at most 50 or 20 or 10 of the first electrodes.

In comparison, the radiation detector preferably comprises at least 100 or at least 25000 of the first electrodes per square millimeter. Thus, if the first electrodes are grouped, they can be combined to subunits of any quantity.

According to at least one embodiment, the radiation detector further comprises quench resistors. Preferably, each one of the quench resistors is assigned to one of the first electrodes or to one of the small groups of first electrodes. By means of the quench resistors, a time resolution of the radiation detector can be increased.

According to at least one embodiment, the respective quench resistor is integrated in the first electrode, in particular is integrated in the tip, preferably in the pillar. By means of this arrangement, the fill factor of the sensitive area can be increased as no space for the quench resistor is needed laterally beside the tips.

As an alternative, the quench resistor can be located on the radiation entrance face and may be of radiation-transmissive fashion so that the radiation to be detected can run through the quench resistor before being absorbed in the semiconductor body.

According to at least one embodiment, the density of the tips varies over the semiconductor body when seen in top view onto the radiation entrance face. For example, the tips are arranged in a higher density in the center of the radiation entrance face. By varying the density of the tips, an electrical field originating from the tips can be adjusted in particular in edge regions of the radiation detector, when seen in top view. As an alternative, there can be various density variations so that there is a plurality of areas in which the tips are arranged quite close to one another and/or there is a plurality of areas in which the tips are arranged with a low density.

Moreover, a method for producing a radiation detector is provided. Said radiation detector is configured as described in one or more exemplary embodiments as stated above.

The production method comprises the following steps, preferably in the stated order:
- providing a substrate,
- growing at least one semiconductor layer onto the substrate to form the radiation-sensitive semiconductor body,
- forming holes at least into a semiconductor layer and optionally also into the substrate,
- filling the holes with at least one material to form the tips for the first electrodes, and
- electrically connecting the tips.

Preferably, the holes and, hence, the tips are limited to the semiconductor layer so that the substrate can be free of the tips. In particular in this configuration the substrate can be of a highly doped material, in particular of silicon.

Hence, the substrate might be an ohmic conductor or a nearly ohmic conductor. When the substrate is highly doped, the substrate itself may serve as the second electrode.

Moreover, a method to operate a radiation detector is provided. The radiation detector described above is operated by the method.

In the operation method, a voltage is applied between the first electrode and the second electrode. Thus, an electrical field increases towards the tips. The radiation detector is operated in an avalanche mode or in a linear mode. The radiation detector is operated in an avalanche mode. The operation in the avalanche mode, also referred to as Geiger mode, is explained, for example, in document DE 10 2009 017 505 A1, see in particular paragraphs 43, 44, 45 and 58.

According to at least one embodiment, an electrical high-field region in which an avalanche breakdown occurs is limited to a shell around an end of the respective tip within the semiconductor body. That is, when charge carriers reach the high-field region, then an avalanche of carriers is produced. Preferably, the shell in which the avalanche breakdown can occur is comparably thin. For example, the thickness of said shell is at most 50% or 15% or 1% of the overall length (Th) of the associated tip. As an alternative or in addition, the shell in which the avalanche breakdown can occur has a thickness of at most 500 nm or 100 nm.

According to at least one embodiment, a light source is assigned to the radiation detector, in particular a light source for near infrared radiation. The radiation detector detects radiation emitted by the light source and reflected by an external object. Thus, a distance between the radiation detector and the light source, on the one hand, and the object, on the other hand, can be determined by means of a time-of-flight measurement. Thus, the radiation detector preferably has a high temporal resolution, for example a temporal resolution of 5 nm or less or of 2 nm or less.

A radiation detector and an operation method for a radiation detector described herein are explained in greater detail below by way of exemplary embodiments and illustrative embodiments with reference to the drawings. Elements which are the same in the individual figures are indicated with the same reference signs. The relationships between the elements are not necessarily shown to scale, however, but rather individual elements may be shown exaggeratedly large to assist in understanding.

In the figures:
- Figure 1: shows a perspective view of a modification of a radiation detector;
- Figure 2: shows a sectional view of an exemplary embodiment of a radiation detector;
- Figure 3: shows an electron microscopic picture of a tip of an exemplary embodiment of a radiation detector;
- Figure 43: shows a schematic representation of an electric field around a tip of an exemplary embodiment of a radiation detector;

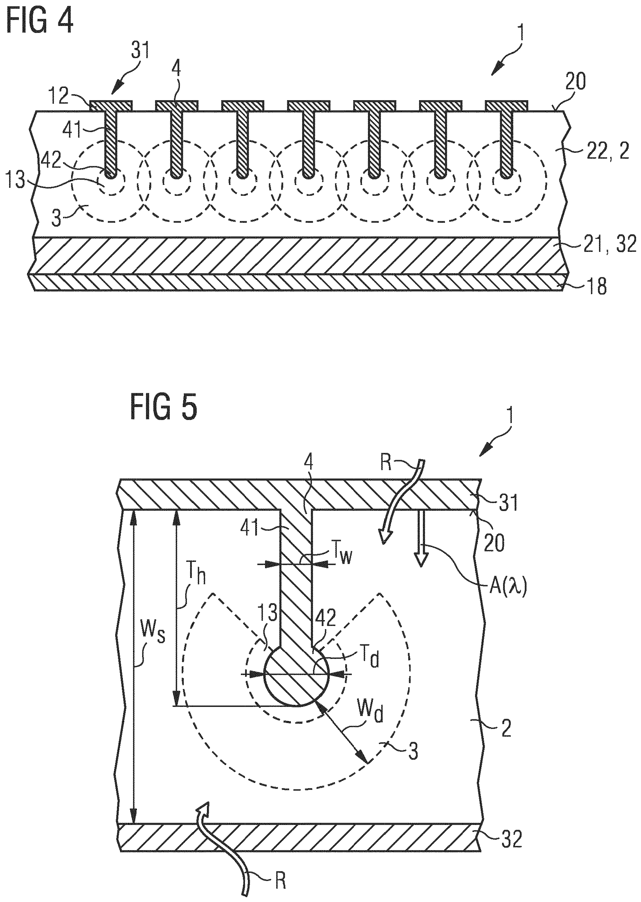

- Figure 4: shows a sectional view of an illustrative embodiment of a radiation detector which is not according to the invention;
- Figure: shows a sectional view of an exemplary embodiment of a radiation detector;

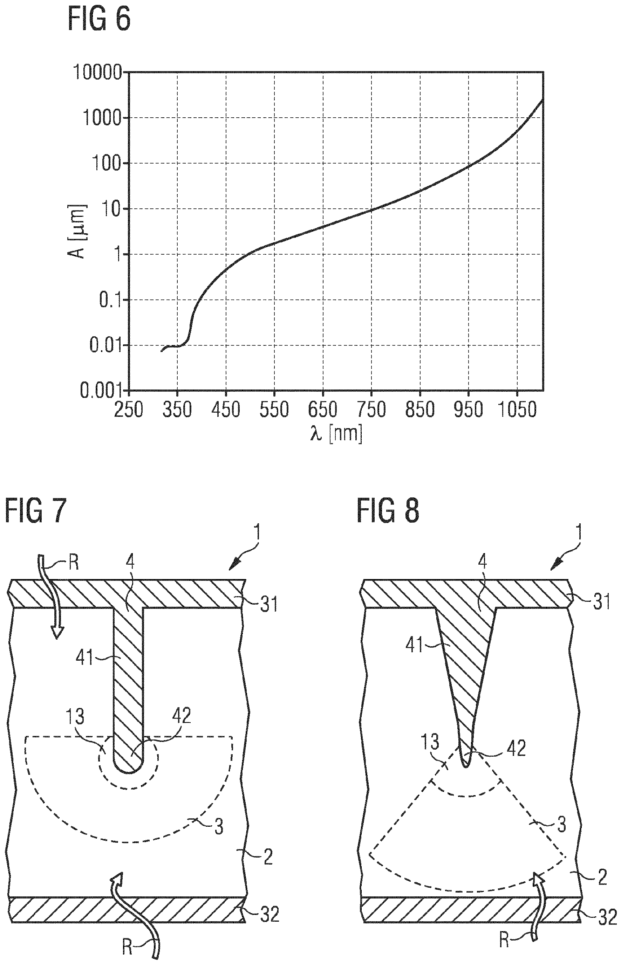

- Figure 6: shows the dependency of an absorption coefficient for radiation depending on the wavelength in silicon,
- Figures 7 and 8: show sectional views of illustrative embodiments of radiation detections which are not according to the invention;

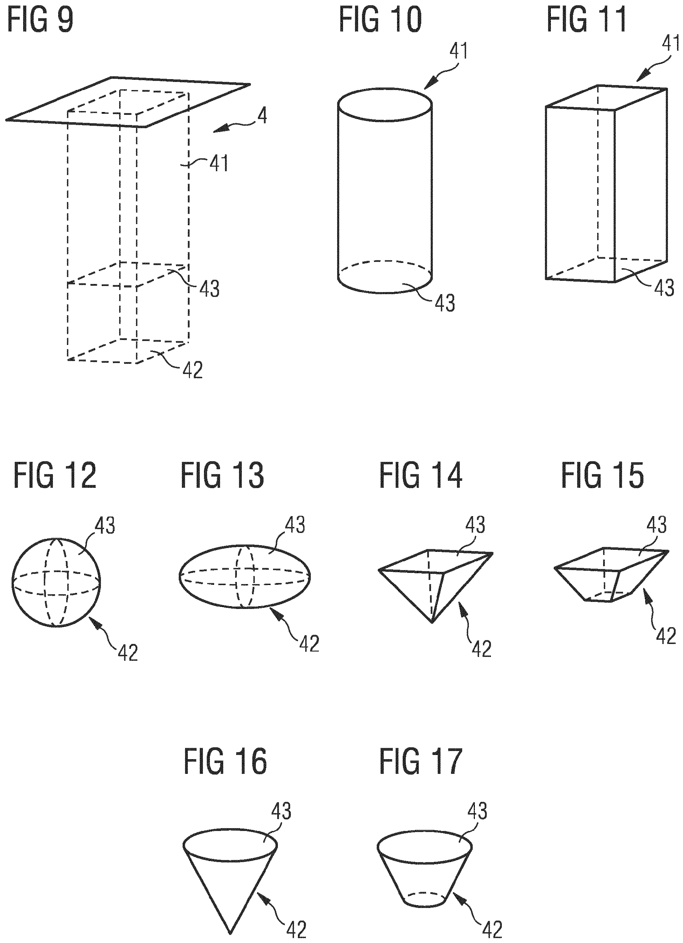

- Figures 9 to 17: show perspective views of tips and parts of tips of exemplary embodiments of radiation detectors;

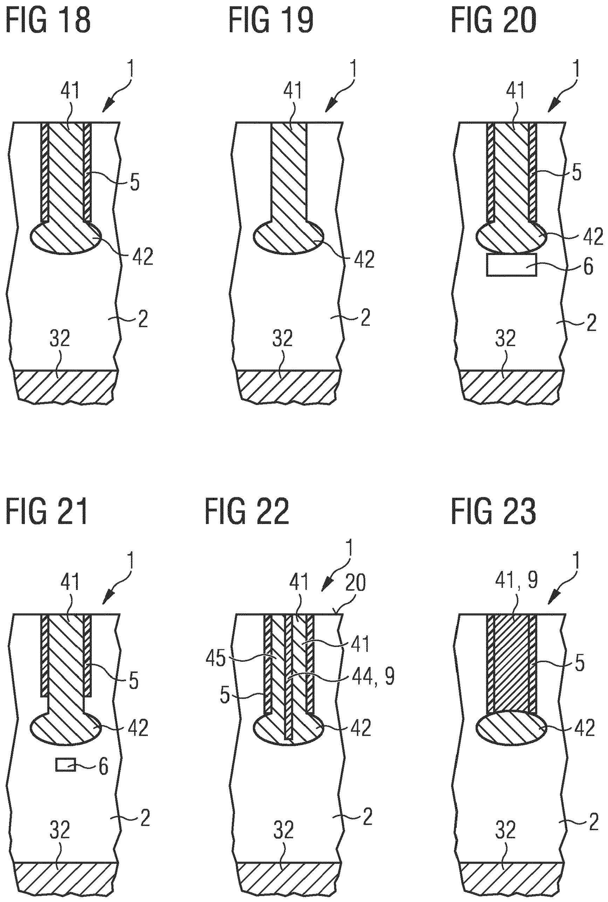

- Figures 18 to 29: show sectional views of exemplary embodiments of radiation detectors;

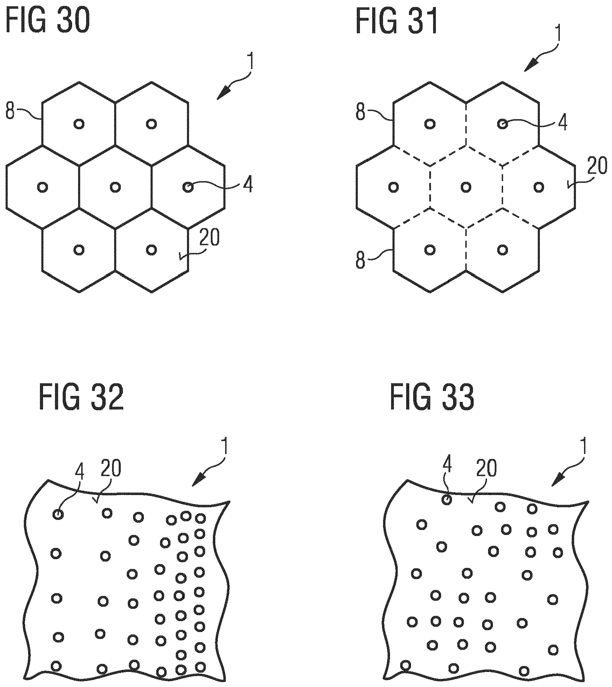

- Figures 30 to 33: show top views of exemplary embodiments of radiation detectors;

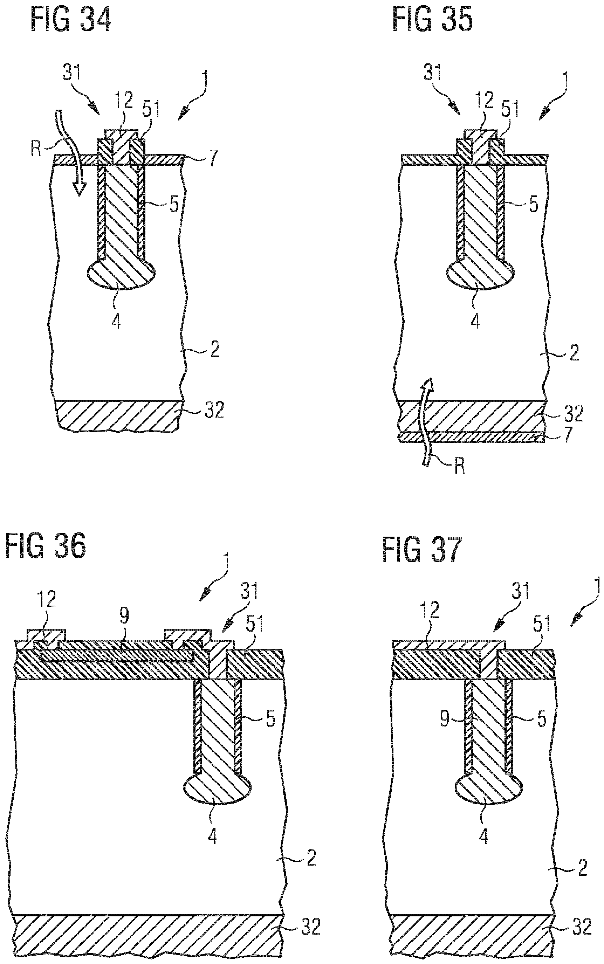

- Figures 34 to 41: show sectional views of exemplary embodiments of radiation detectors; and

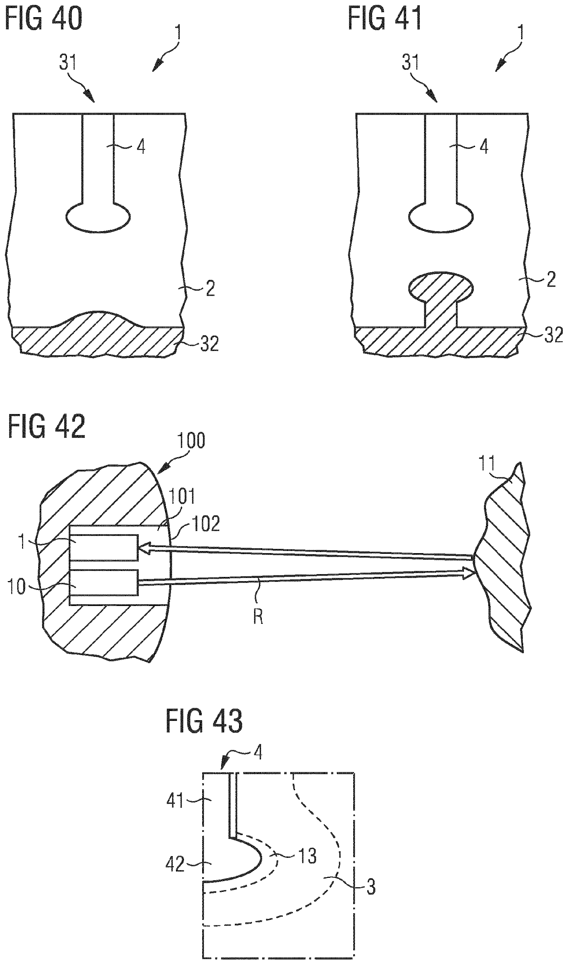

- Figure 42: shows a sectional view of a principle of operation of an exemplary embodiment of a radiation detector.

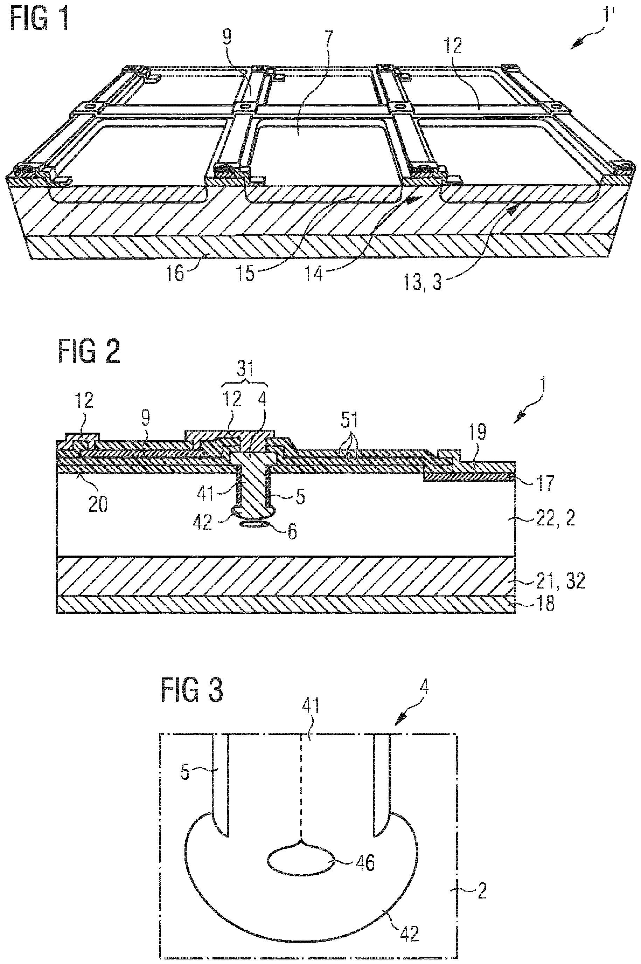

Figure 1 shows a modification 1' of a radiation detector. The modification 1' comprises a plurality of cells based on silicon, each having an antireflection coating 7 and a p-doped entrance window 15. Between adjacent cells, there are conductor tracks 12 on an n-doped semiconductor body 16 in periphery regions 14. In the periphery regions 14, there could be quench resistors 9. A sensitive area 3 corresponds to a high-field region 13 and is located beyond the p-doped entrance windows 15 in each case. Such a modification 1' is described, for example, in document DE 10 2009 017 505 A1.

Such modifications 1' are called "SiPM" which stands for silicon-based photo multiplier. Such detectors can be photon number resolved detectors which comprise an array of independently operated avalanche photodiodes, corresponding to the cells, also referred to as micro APDs. The cells are separated from each other by the periphery regions 14 for independence, said periphery regions 14 correspond to an insensitive, dead space. The electric field in the sensitive area 3 is formed as uniformly as possible by planar electrodes which are, in particular, formed by highly doped semiconductor layers for avalanche triggering.

In such SiPM detectors, the main trade-off is photon detection efficiency versus dynamic range. With a shrinking of the cells, which is mandatory for high dynamic range, the non-sensitive periphery regions 14 get more and more dominant. In a planar SiPM design, the periphery regions 14 cannot be minimized beyond a certain limit. This is because border effects become particularly critical for very small and deep micro APDs. The border effect is described, for example, in document F. Acerbi et al., Silicon Photomultipliers and Single-Photon Avalanche Diodes with Enhanced NIR Detection Efficiency at FBK, in Nuclear Instruments and Methods in Physics Research Section A: Accelerators, Spectrometers, Detectors and Associated Equipment, December 2017, DOI: 10.1016/j.nima.2017.11.098.

An aspect of the radiation detector described here is focused on overcoming the border effect for small and deep micro APDs. Additionally, the correlated noise can be reduced by the device construction described here due to a decreased gain.

An exemplary embodiment of a radiation detector 1 can be seen in Figure 2. The radiation detector 1 comprises a substrate 21 that is a highly p-doped silicon substrate. The substrate 21 can also constitute a second electrode 32. Optionally, on the second electrode 32 a backside contact 18 is applied.

A semiconductor layer 22 is grown on the substrate 21. The semiconductor layer 22 constitutes a radiation-sensitive semiconductor body 2. As a first electrode 31, there is a tip 4 that runs from a radiation entrance face 20 of the semiconductor body 2 towards the second electrode 32. The tip 4 comprises a pillar 41 which is of approximately cylindrical shape. At the end of the pillar 41, there is a head 42. The head 42 is of ellipsoidal shape.

Around the pillar 41, there can be an electrical insulation layer 5. Thus, an electrical contact between the tip 4 and the semiconductor body 2 is present only at the head 42. There can be further electrical insulating layers 51 on the radiation entrance face 20. By means of the insulation layers 51 and by means of conductor tracks 12, a quench resistor 9 and the tip 4 can be electrically addressed.

As an option, the periphery contact 19 made of a metal, for example, is located on a p-doped region 17. The semiconductor layer 22 is preferably p-doped, in particular with a comparably low dopant concentration. The tip 4 is preferably made of n-doped polysilicon. The insulation layers 5, 51 can be made of a silicon oxide, the conductor tracks 12 can be made of a metal or of a transparent conductive oxide.

The quench resistor 9 is preferably of polysilicon. In particular, the quench resistor 9 is configured as described in paragraphs 27, 28 and 74 of document DE 10 2009 017 505 A1.

For simplicity, in Figure 2 only one first electrode 31 is shown. However, the radiation detector 1 preferably comprises a plurality of the tips 4, for example at least 100,000 of the tips 4.

As an option, there is a doped area 6 near the head 42 in the semiconductor layer 22. The doped area 6 is preferably p-doped, for example with boron. A dopant concentration in the doped area 6 is significantly higher than in the silicon semiconductor layer 22.

Figure 3 shows a schematic cross section of the head 42 and of the pillar 41. For example, a hole for the pillar 41 in the semiconductor 2 is produced by anisotropic dry etching. Then, a hole for the head 42 is produced in particular by isotropic wet etching. Thus, the head 42 can have small regions that extend towards the radiation entrance face 20, starting from the end of the pillar. However, in general the shape of the head 42 is ellipsoidal.

Further, during filling the recess for the tip 4 with a conductive material such as polysilicon or a metal, it is possible that such material grows with an approximately constant rate from all side walls. Hence, especially in the head 42 of the tip 4, a cavity 46 may result. However, this cavity 46 does not impair the functionality of the tip 4 as long as the side walls are coated sufficiently thick. Such cavities 46 could also be present in all other exemplary embodiments.

In Figure 43, an electrical field around the tip 4 is illustrated. Near the head 42, there is the high-field region 13 which is configured for an avalanche breakdown. The high-field region 13 forms a thin shell directly around the head 42 and limited to the head 42. A large sensitive area 3 is located all around the high-field region 13. Photons absorbed in the sensitive area 3 generate electron hole pairs, for example the electrons are directed towards the head 42 due to the electrical field. When the charge carriers reach the high-field region 13, an avalanche breakdown occurs and the resulting charge carriers are collected in the head 42. Thus, the pillar 41 is just for a voltage supply and for an electrical contact towards the head 42.

Hence, the sensitive area 3 of the micropixel or cell associated with the tip 4 is depleted from the point-like head 42 of the tip 4 of the electrode 31 which is, in particular, formed into the silicon 21, 22. The electrical field is diverging from the quasi point-shaped head 42, giving a low capacitance structure. The high-field region 13 is formed only in a very small area around the head 42. In comparison to the planar structure as depicted in Figure 1, all photocarriers generated in the depletion region are focused to the head 42.

Thus, with the design as exemplified in Figure 2, less, or nearly no, dead space and no, or no significant, border effects occur due to the focussing electric fields. Thus, a very high fill factor and a high photon detection efficiency can be achieved. Further, a higher time resolution can be achieved due to higher photon detection efficiency. Moreover, the higher photon detection efficiency allows an increased photon number resolution. Thus, the micropixels or cells can be further scaled down and/or miniaturized. With an increased number of cells, a higher dynamic range is feasible.

Further, a lower operating voltage is possible due to the point-like, shallow high field region near the tip 4. Thus, the depletion region can be extended up to several 10 µm into the semiconductor layer 22 even at low overvoltages, in particular in a lateral direction parallel to the radiation entrance face 20. This allows in particular red-sensitive devices with a high photon detection efficiency at longer wavelengths. With this design, SiPMs in low voltage CMOS technology are feasible that can be operated with a voltage in the order of 10 V.

Moreover, with the design described here a lower capacitance can be reached due to the diverging electrical field. This improves the time response and the recovery time of the detector. This allows a higher dynamic range due to shorter recovery times. Moreover, correlated noise can be decreased due to lower gain, as after-pulsing and optical crosstalk can be reduced. The time resolution can be improved due to the faster response and due to lower noise, too. Moreover, the lower capacitance allows a higher photon number resolution due to lower noise and goes ahead with lower electronic noise. As no noise-suppressing elements may be necessary, a simplified overall configuration can be realized. Thus, production costs can be reduced.

In Figure 4 it is shown that there is a plurality of the tips 4. At each one of the heads 42 of the tips 4, there is a high-field region 13 that is surrounded in a nearly spherical shape by the sensitive area 3. The sensitive areas 3 can adjoin each other or may overlap, so that a high fill factor can be realized.

Other than shown in Figure 4, preferably there is an electrical insulation layer at the pillars 41 as illustrated in connection with Figure 2.

In Figure 4, the second electrode 32 has been illustrated as a continuous electrode that is assigned to all tips 4. Contrary to that, there could be a separate second electrode 32 for each one of the tips 4 or for groups of the tips 4. This can also be true in all other embodiments. However, a continuous second electrode 32 is preferred.

In Figure 5, one of the tips 4 is illustrated in more detail. In this case, the tip 4 has an approximately cylindrical pillar 41 and an approximately spherical head 42. Thus, the sensitive area 3 also has approximately a spherical shape with an insensitive sector around the pillar 41.

A thickness Ws of the sensitive semiconductor body 2 is preferably at least 1 µm or at least 2 µm. The thickness Ws can reach up to 1 millimeter or up to 700 µm if the substrate 21 is included in the semiconductor body 2, in particular if the second electrode 32 is of a metal or of a transparent conductive oxide.

The thickness Ws exceeds the tip height Th. The tip height Th is preferably at least 1 µm and/or at most 25 µm. In particular, the tip height Th is between two times and twenty times, inclusive, a mean pillar width Tw. The mean pillar width Tw is preferably at least 0.5 µm and/or at most 2 µm. Preferably, the thickness Ws of the sensitive semiconductor body 2 is at least three times and/or at most 500 times the pillar width Tw. A maximum width Td of the tip 4 is at least 0.5 µm and/or at most 5 µm. In particular, the maximum width Td is between 0.1 times and/or at most 5 times the pillar width Tw, also compare the exemplary embodiments of Figures 14 to 17. In case the tip has a shape as shown in figure 8, the pillar width Tw is preferably at most 0.5 µm. In the embodiment of Figure 5, the maximum width of the tip 4 Td corresponds to a diameter of the head 42. The pillar width Tw is constant along the pillar 41. These numerical values preferably also apply to all other exemplary embodiments.

The detector 1 of Figure 5 is particularly suitable to detect infrared radiation. Radiation R can radiate into the semiconductor body 2 from the side with the first electrode 31. As an alternative or in addition, the radiation R can enter the semiconductor body 2 from the side of the second electrode 32, in particular if the second electrode 32 is of a transparent conductive oxide or of a very thin metallic layer or is formed as a grid.

In particular if the detector 1 is sensitive to infrared radiation, the sensitive semiconductor body 2 is comparably thick. That is because the preferred material for the semiconductor body 2 is silicon and silicon has a strong dependency of the absorption depth A on the wavelength λ, compare Figure 6. In particular, the thickness Ws of the sensitive semiconductor body 2 amounts to at least 5% of the absorption depth A or to at least the absorption depth A or to at least twice the absorption depth A for the wavelength of the radiation R to be detected by the radiation detector 1. The effective thickness of the semiconductor body 2 may be increase if the second electrode 32 is reflective for the radiation to be detected.

In the embodiment of Figure 7, the head 42 is of semispherical shape. In this case, the sensitive area 3 is also of semispherical shape. Thus, a tip diameter corresponds to the diameter of the head 42. The configuration of Figure 7 is particularly suitable to detect visible light wherein the radiation R to be detected can enter the semiconductor body 2 from the side of the first electrode 31 and/or from the side of the second electrode 32.

In the embodiment of Figure 8, a width of the tip 4 continuously decreases towards the head 42. Because of this design, the sensitive area 3 has approximately the shape of a spherical sector. This configuration is particularly suitable to detect blue light or UV radiation wherein the radiation R enters the semiconductor body 2 preferably from the backside with the second electrode 32. For radiation with longer wavelengths than blue light, this detector geometry might be comparably insensitive.

Thus, the tip shape and, hence, the distribution of the electric field, can be optimized to the spectral sensitivity and to suppress noise due to dark current.

In Figures 9 to 17, some exemplary shapes for the pillars 31 and the heads 42 are illustrated. It is possible that there is an intersection 43 that forms a virtual or real boundary between the pillars 41 and the head 42. For example, at the intersection 43 the electrical insulation layer ends, not shown in these figures. Otherwise, at the intersection 43 there can be a change in the geometry of the tip 4, for example a kink when seen in cross-section.

According to Figure 9, both the pillar 41 and the head 42 are of cubic shape. This is also illustrated in Figure 11 where the pillar 41 only is illustrated. Otherwise, the pillar 41 can be of cylindrical shape, see Figure 10.

In Figures 12 to 17, various exemplary shapes of the head 42 are illustrated which can be used to shape the sensitive area 3.

According to Figure 12, the head 42 is of spherical shape. In Figure 13, the head 42 is illustrated to have an ellipsoidal shape. In Figure 14, the head 42 is of a pyramidal shape, for example with four edges, wherein other numbers of edges can also be present. Figure 15 refers to a corresponding truncated pyramid, whereas also a number of edges other than four can be present. Figures 16 and 17 show heads 42 that have the shape of a cone or of a truncated cone.

Thus, with the head 42 and also with the pillar 41 the divergent electrical field and a suitable high-field region 13 can be defined to adapt the detector 1 to the respective requirements. In particular, any curved surface might be suitable to solve a pre-defined requirement. Hence, the configurations of Figures 9 to 11 should be understood to be examples only.

In Figures 18 to 23, various designs around the tips 4 are illustrated. The design of Figure 18 essentially corresponds to the design explained in connection with Figure 2.

Contrary to that, according to Figure 19 no insulation layer is present.

In the exemplary embodiment of Figure 20, there is the doped area 6 beyond the head 42. The doped area 6 is close to the head 42. A diameter of the doped area 6 is less than the diameter of the head 42, but more than the diameter of the pillar 41.

In the embodiment of Figure 21, the doped area 6 is smaller in size so that a diameter of the pillar 41 exceeds a diameter of the doped area 6.

The doped area 6 is in particular formed by ion implantation. Thus, the sharp edges of the doped area 6 as indicated in the figures are to be understood as being only schematic as the doped area 6 does not need to have sharp boundaries because of ion implantation.

In Figure 22 it is illustrated that the tip 4 can be of a core-shell construction. That is, there could be a core 44 that is of a metal, for example, whereas a shell 45 is of a semiconductor material like polysilicon, for example.

Otherwise, the core 44 could be a cavity 46, too; that is, instead of the core 44 there could be a hollow space. Contrary to what is shown in Figure 3, the cavity 46 may extend into the pillar 41 or might completely run through the pillar 41 up to the radiation entrance face 20.

In Figure 23 it is illustrated that the pillar 41 can be of a first material and the head 42 can be of a second material. For example, the first material is a metal and the second material is a semiconductor material. When using two different semiconductor materials for the pillar 41 and for the head 42, the quench resistor 9 might be realized by the pillar 41 itself.

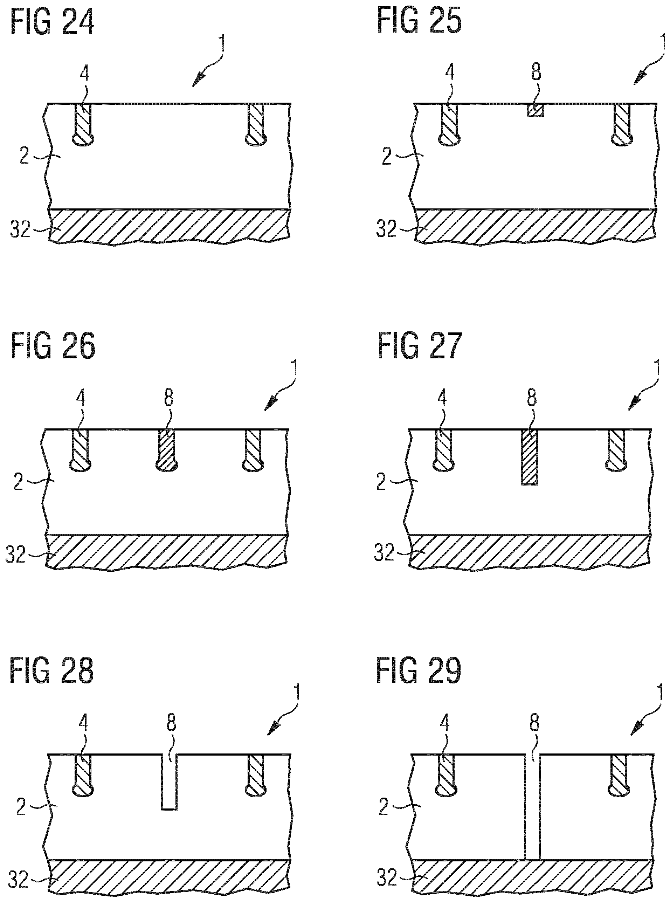

According to the embodiment of Figure 24, the semiconductor body 2 extends over the entire detector 1 without thickness variations, not taking into account the tips 4. Thus, there is no trench that separates the cells of the detector 1 with the tips 4. Not shown, there can be electrical through contacts that preferably do not have any optical function.

Contrary to that, according to Figure 25 there is a shallow trench 8 between adjacent tips 4. The trench 8 can be filled with air or can be evacuated or can also be filled with a different material, for example with an absorbing or reflective material like a metal.

According to Figure 26, when seen in cross-section the trench 8 has the same shape as the tips 4. Again, the trench 8 might be filled with an absorptive or reflective material.

According to Figure 27, the trench 8 is comparably deep, that is deeper than the tips 4, so that a distance between the second electrode 32 and an end of the trench 8 might be smaller than a distance between the second electrode 32 and the tips 4.

In Figure 28 it is illustrated that the trench 8 might be evacuated or filled with a gas.

According to Figure 29, the trench 8 can reach until the second electrode 32 so that the semiconductor body 2 is completely removed in the area of the trench 8.

In the top views of Figures 30 and 31, different configurations of the trenches 8 are illustrated. In Figures 30 and 31, all configurations of Figures 25 to 29 can be realized.

According to Figure 30, each one of the cells comprises one of the tips 4 and is completely or almost completely surrounded by the trench 8. According to Figure 31, small groups of cells and, thus, of tips 4 are completely surrounded or almost completely by a common trench 8.

As can be seen from Figures 30 and 31, the cells and, thus, the tips 4 are preferably arranged in a hexagonal grid. Contrary to that, other arrangements of the tips 4 when seen in top view can be used, for example rectangular or quadratic grids.

The trenches 8 are configured, for example, as described in document DE 10 2009 017 505 A1, see paragraphs 30, 31, 32 and 90.

In Figure 32 it is illustrated that the tips 4 can be distributed inhomogeneously when seen in top view onto the radiation entrance face 20. There can be a continuous gradient. That is, in Figure 32, a density of the tips 4 increases monotonically or strictly monotonically from left to right.

Otherwise, see Figure 33, there can be a plurality of regions with an increased density of the tips 4. Between these areas with an increased density, there can be a continuous region with a lower density of the tips 4. The distribution of high density and low density regions of the tips 4 can also be inverted.

By adjusting the density of the tips 4, the electric field and thus the sensitive area can be adjusted in more detail.

In Figure 34 it is illustrated that there can be an antireflection coating 7 on the side of the first electrode 31. Contrary to that, according to Figure 35 the antireflection coating 7 is located on the side of the second electrode 32. If radiation enters the detector 1 from two sides, there could be two antireflection coatings 7.

According to Figure 36, the quench resistor 9 is arranged laterally alongside the tip 4. Otherwise, the quench resistor 9 can be integrated in the tip 4, the Figure 37.

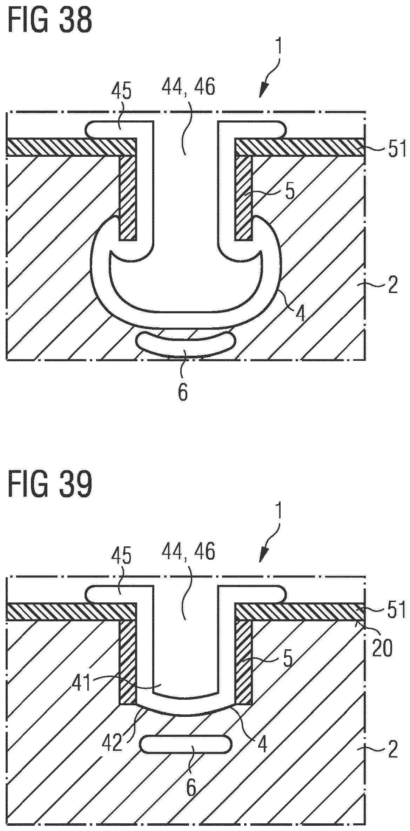

In the exemplary embodiment of Figure 38 it is illustrated that there is a shell 45 which is preferably of polysilicon. The core 44 can also be of a semiconductor material like silicon or can be of a metal.

Thus, preferably the hole for the pillar 41 is formed with anisotropic etching with an additional isotropic etching step to form the pseudo ball profile for the head 42. If required, an additional ion implementation step could be carried out to form the doped area 6. Then, the material for the shell 45 is deposited, preferably followed by an annealing step.

In Figure 39 it is illustrated that the pillar 41 together with the head 42 is of nearly cubic or cylindrical shape. Due to the etching of the recess for the tip 4, there might be rounded edges at a bottom of the recess. The electrical insulation layer 5 can nearly range until the end of the tip 4 and the head 42 might be limited to the bottom face of the tip 4, said bottom face may run in parallel or approximately in parallel with the radiation entrance face 20.

In Figures 38 and 39 it is possible that there is no core 44, but that there is a hollow space to form the cavity 46 instead of the core 44. Such cavities 46 could also be present in all other exemplary embodiments. Such cavities 46 may result from the growth conditions during the filling of the recess for the tip 4 with the material for the shell 45.

In Figures 40 and 41 it is shown that the second electrode 32 can have a protrusion that is located opposite the tip 4. According to Figure 40, said protrusion is only small and has an approximately semicircular shape when seen in cross-section. According to Figure 41, the second electrode 32 has a more pronounced protrusion that can have the basic shape of the tip 4 when seen in cross-section.

That is, the second electrode 32 may have a structure with tips, too. This can also be true in all other exemplary embodiments.

The different aspects for the tips 4 like the geometrical shape as illustrated in the individual embodiments can be combined in each case with the other aspects as the density of the tips 4, the occurrence of the trenches 8, the core-shell setup or the existence of a quench resistor 9, for example. Moreover, the insulation layer 5 can be present in all exemplary embodiments, even if not explicitly shown.

Figure 42 illustrates a vehicle 100 that comprises the detector 1 and also comprises a radiation source 10. The radiation source 10 emits a radiation R, preferably near infrared laser radiation. This radiation R is reflected in part at an external object 11 back towards the radiation detector 1. Thus, by means of a time-of-flight measurement and because of the high temporal resolution of the radiation detector 1 and the light source 10, a distance to the object 11 can be measured.

Other than shown, the light source 10 and the detector 1 can be arranged, not only close to one another, but also at a distance to one another. Thus, the detector 1 and the light source 10 need not be accommodated in a single recess 101 in the vehicle 100.

As an option, there is a cover 102 that covers the radiation source 10 and/or the detector 1. The cover 102 might have a filter function for the radiation so that only radiation of specific wavelength ranges can reach the detector 1.

The components shown in the figures can follow, unless indicated otherwise, preferably in the specified sequence directly one on top of the other. Layers which are not in contact with each other in the figures are preferably spaced apart from one another. If lines are drawn parallel to one another, the corresponding surfaces are preferably oriented parallel to one another. Likewise, unless indicated otherwise, the positions of the drawn components relative to one another are correctly reproduced in the figures.

## Claims

1. A radiation detector (1) comprising:
- a semiconductor body (2) having at least one radiation entrance face (20),
- a plurality of first electrodes (31), and
- at least one second electrode (32),
wherein
- each one of the first electrodes (31) comprises a tip (4) that extends into the semiconductor body (2),
- each one of the tips (4) comprises a pillar (41) and a head (42),
- a penetration depth (Th) of the tips (4) into the semiconductor body (2) exceeds a maximum width (Td) of the tips (4), and
- the tips (4) are configured to collect charge carriers generated in the semiconductor body (2) by the radiation to be detected,
**characterized in**
further comprising at least one doped area (6), the doped area (6) is associated to one of the tips (4) and is located between said tip (4) and the second electrode (32), a distance between the doped area (6) and the tip (4) is smaller than that between the doped area (6) and the second electrode (32), and a peak doping concentration in the doped area (6) exceeds a peak doping concentration of adjacent regions of the semiconductor body (2) by at least a factor of 5, and/or
the pillar (41) of at least one of the tips (4) is narrower than the associated head (42) so that the maximum width (Td) is present at the head (42), said pillar (41) is of cylindrical or prismatic shape, and said head (42) is of circular or elliptic shape when seen in a cross section along the respective tip (4).

2. The radiation detector (1) according to the preceding claim,
wherein the pillar (41) starts at the radiation entrance face (20) of the semiconductor body (2) and the head (42) terminates the pillar (41) within the semiconductor body (2), wherein an electrical insulation layer (5) is located directly between the pillar (41) and the semiconductor body (2) so that only the head (42) is in direct electrical contact with the semiconductor body (2),
wherein the pillar (41) extends along at least 40% of the tip (4), and
wherein the penetration depth (Th) of said tip (4) into the semiconductor body (2) exceeds a maximum width of the insulation layer (5).

3. The radiation detector (1) according to one of the previous claims,
wherein at least one of the tips (4) terminates in the semiconductor body (2) with a curvature,
wherein a radius of the curvature is at least 5 % and at most 60% of the penetration depth (Th).

4. The radiation detector (1) according to one of the preceding claims,
wherein at least one of the tips (4) becomes strictly monotonically narrower along the direction into the semiconductor body (2),
wherein said tip (4) terminates in the semiconductor body (2) with an edge and/or a corner.

5. The radiation detector (1) according to one of the preceding claims,
wherein the semiconductor body (2) is based on silicon, wherein the radiation detector (1) is configured to detect radiation from at least a part of the wavelength range from 800 nm to 980 nm inclusive,
wherein a maximum thickness of the semiconductor body (2) between the first electrode (31) and the second electrode (32) is between 1 µm and 25 µm inclusive, and
wherein the semiconductor body (2) is provided with an antireflection coating (7) for the radiation to be detected so that a proportion of the radiation to be detected that reaches into the semiconductor body (2) is increased.

6. The radiation detector (1) according to one of the preceding claims,
wherein the tips (4) are in part or completely of a semiconductor material that is different from the semiconductor body (2).

7. The radiation detector (1) according to one of the preceding claims,
wherein the semiconductor body (2) continuously extends over the first electrodes (31) so that a thickness of the semiconductor body (2) between adjacent tips (4) is constant.

8. The radiation detector (1) according to one of claims 1 to 6,
wherein each one of the first electrodes (31) or small groups of first electrodes (31) are surrounded by trenches (8), the semiconductor body (8) has a reduced thickness or is completely removed in an area of the trenches (8).

9. The radiation detector (1) according to one of the preceding claims,
further comprising quench resistors (9), each one of the quench resistors (9) is assigned to one of the first electrodes (31),
wherein the respective quench resistor (9) is integrated in the tip (4) of the assigned first electrode (31).

10. The radiation detector (1) according to one of the preceding claims,
wherein a density of the tips (4) varies over the semiconductor body (2) when seen in top view onto the radiation entrance face (20).

11. A method by means of which the radiation detector (1) according to one of the preceding claims is produced, the method comprises the steps of:
- providing a substrate (21) and at least one second electrode (32), wherein, if the substrate (21) is highly doped, the substrate (21) itself may serve as the second electrode (32),
- growing at least one semiconductor layer (22) onto the substrate (21) to form the semiconductor body (2),
- forming holes (23) at least into the semiconductor layer (22),
- forming at least one doped area (6) by ion implantation, the doped area (6) is associated to one of the tips (4) and is located between said tip (4) and the second electrode
- filling the holes (23) with at least one material to form the tips (4) which each comprise a pillar (41) and a head (42), wherein a penetration depth (Th) of the tips (4) into the semiconductor body (2) exceeds a maximum width (Td) of the tips (4) so that each one of the plurality of first electrodes (31) of the radiation detector (1) comprises one of the tips (4) that extends into the semiconductor body (2), and
- electrically connecting the tips (4),
wherein
at least one doped area (6) is formed by ion implantation, the doped area (6) is associated to one of the tips (4) and is located between said tip (4) and the second electrode (32), a distance between the doped area (6) and the tip (4) is smaller than that between the doped area (6) and the second electrode (32), and a peak doping concentration in the doped area (6) exceeds a peak doping concentration of adjacent regions of the semiconductor body (2) by at least a factor of 5, and/or
the hole (23) for at least one of the tips (4) is formed so that the pillar (41) of said at least one tip (4) is narrower than the associated head (42) so that the maximum width (Td) is present at the head (42), said pillar (41) is of cylindrical or prismatic shape, and said head (42) is of circular or elliptic shape when seen in a cross section along the respective tip (4).

12. A method to operate the radiation detector (1) according to one of claims 1 to 10,
wherein a voltage is applied between the first electrode (31) and the second electrode (32) so that an electrical field increases towards the heads (42) of the tips (4),
wherein the radiation detector (1) is operated in a proportional avalanche mode, below breakdown, or in Geiger mode above breakdown.

13. The method according to the preceding claim,
wherein the radiation detector (1) is operated in the avalanche mode so that an electrical high-field region in which an avalanche breakdown occurs is limited to a shell around an end of the tip (4) within the semiconductor body (2),
wherein a light source (10) for near-infrared radiation is assigned to the radiation detector (1), the radiation detector (1) detects near-infrared radiation emitted by the light source (10) and reflected by an external object (11) to determine a distance to the object (11) by means of a time-of-flight measurement.

## Patentansprüche

1. Ein Strahlungsdetektor (1), umfassend:
- einen Halbleiterkörper (2) mit mindestens einer Strahlungseintrittsfläche (20),
- eine Vielzahl von ersten Elektroden (31), und
- mindestens eine zweite Elektrode (32),
wobei
- jede der ersten Elektroden (31) eine Spitze (4) umfasst, die sich in den Halbleiterkörper (2) erstreckt,
- jede der Spitzen (4) eine Säule (41) und einen Kopf (42) umfasst,
- eine Eindringtiefe (Th) der Spitzen (4) in den Halbleiterkörper (2) eine maximale Breite (Td) der Spitzen (4) überschreitet, und
- die Spitzen (4) dazu konfiguriert sind, durch die zu detektierende Strahlung in dem Halbleiterkörper (2) erzeugte Ladungsträger zu sammeln,
**dadurch gekennzeichnet,**
**dass** der Strahlungsdetektor (1) ferner mindestens einen dotierten Bereich (6) umfasst, wobei der dotierte Bereich (6) einer der Spitzen (4) zugeordnet ist und sich zwischen der Spitze (4) und der zweiten Elektrode (32) befindet, ein Abstand zwischen dem dotierten Bereich (6) und der Spitze (4) kleiner ist als ein Abstand zwischen dem dotierten Bereich (6) und der zweiten Elektrode (32), und eine Spitzendotierungskonzentration in dem dotierten Bereich (6) eine Spitzendotierungskonzentration benachbarter Bereiche des Halbleiterkörpers (2) um mindestens einen Faktor 5 überschreitet und/oder
die Säule (41) mindestens einer der Spitzen (4) schmaler ist als der zugehörige Kopf (42), so dass die maximale Breite (Td) an dem Kopf (42) vorliegt, die Säule (41) zylindrisch oder prismatisch ist, und der Kopf (42) kreisförmig oder elliptisch ist, in einem Querschnitt entlang der jeweiligen Spitze (4) gesehen.

2. Der Strahlungsdetektor (1) nach dem vorhergehenden Anspruch,
wobei die Säule (41) an der Strahlungseintrittsfläche (20) des Halbleiterkörpers (2) beginnt und der Kopf (42) die Säule (41) innerhalb des Halbleiterkörpers (2) abschließt,
wobei eine elektrische Isolationsschicht (5) direkt zwischen der Säule (41) und dem Halbleiterkörper (2) angeordnet ist, so dass nur der Kopf (42) in direktem elektrischem Kontakt mit dem Halbleiterkörper (2) steht,
wobei sich die Säule (41) entlang mindestens 40 % der Spitze (4) erstreckt, und
wobei die Eindringtiefe (Th) der Spitze (4) in den Halbleiterkörper (2) eine maximale Breite der Isolationsschicht (5) überschreitet.

3. Der Strahlungsdetektor (1) nach einem der vorhergehenden Ansprüche,
wobei mindestens eine der Spitzen (4) in dem Halbleiterkörper (2) mit einer Krümmung endet,
wobei ein Radius der Krümmung mindestens 5 % und höchstens 60 % der Eindringtiefe (Th) beträgt.

4. Der Strahlungsdetektor (1) nach einem der vorhergehenden Ansprüche,
wobei mindestens eine der Spitzen (4) streng monoton entlang der Richtung in den Halbleiterkörper (2) schmaler wird,
wobei die Spitze (4) in dem Halbleiterkörper (2) mit einer Kante und/oder einer Ecke endet.

5. Der Strahlungsdetektor (1) nach einem der vorhergehenden Ansprüche,
wobei der Halbleiterkörper (2) auf Silizium basiert,
wobei der Strahlungsdetektor (1) dazu konfiguriert ist,
Strahlung von mindestens einem Teil des Wellenlängenbereichs von einschließlich 800 nm bis einschließlich 980 nm zu detektieren,
wobei eine maximale Dicke des Halbleiterkörpers (2) zwischen der ersten Elektrode (31) und der zweiten Elektrode (32) zwischen einschließlich 1 µm und einschließlich 25 µm liegt, und
wobei der Halbleiterkörper (2) mit einer Antireflexionsbeschichtung (7) für die zu detektierende Strahlung versehen ist, sodass ein Anteil der zu detektierenden Strahlung, der in den Halbleiterkörper (2) gelangt, erhöht wird.

6. Der Strahlungsdetektor (1) nach einem der vorhergehenden Ansprüche,
wobei die Spitzen (4) teilweise oder vollständig aus einem Halbleitermaterial bestehen, das sich von dem Halbleiterkörper (2) unterscheidet.

7. Der Strahlungsdetektor (1) nach einem der vorhergehenden Ansprüche,
wobei sich der Halbleiterkörper (2) kontinuierlich über die ersten Elektroden (31) erstreckt, sodass eine Dicke des Halbleiterkörpers (2) zwischen benachbarten Spitzen (4) konstant ist.

8. Der Strahlungsdetektor (1) nach einem der Ansprüche 1 bis 6,
wobei jede der ersten Elektroden (31) oder kleine Gruppen von ersten Elektroden (31) von Gräben (8) umgeben sind, wobei der Halbleiterkörper (8) in einem Bereich der Gräben (8) eine reduzierte Dicke aufweist oder vollständig entfernt ist.

9. Der Strahlungsdetektor (1) nach einem der vorhergehenden Ansprüche,
ferner umfassend Quenchwiderstände (9), wobei jedem der Quenchwiderstände (9) einer der ersten Elektroden (31) zugeordnet ist,
wobei der jeweilige Quenchwiderstand (9) in die Spitze (4) der zugeordneten ersten Elektrode (31) integriert ist.

10. Der Strahlungsdetektor (1) nach einem der vorhergehenden Ansprüche,
wobei eine Dichte der Spitzen (4) in Draufsicht auf die Strahlungseintrittsfläche (20) gesehen über den Halbleiterkörper (2) hinweg variiert.

11. Ein Verfahren, mit dem der Strahlungsdetektor (1) nach einem der vorhergehenden Ansprüche hergestellt wird, umfassend die Schritte:
- Bereitstellen eines Substrats (21) und mindestens einer zweiten Elektrode (32), wobei, wenn das Substrat (21) hochdotiert ist, das Substrat (21) selbst als die zweite Elektrode (32) dienen kann,
- Aufwachsen mindestens einer Halbleiterschicht (22) auf das Substrat (21), um den Halbleiterkörper (2) zu bilden,
- Ausbilden von Löchern (23) zumindest in die Halbleiterschicht (22),
- Ausbilden mindestens eines dotierten Bereichs (6) durch Ionenimplantation, wobei der dotierte Bereich (6) einer der Spitzen (4) zugeordnet ist und sich zwischen der Spitze (4) und der zweiten Elektrode befindet,
- Füllen der Löcher (23) mit mindestens einem Material, um die Spitzen (4) zu bilden, die jeweils eine Säule (41) und einen Kopf (42) umfassen, wobei eine Eindringtiefe (Th) der Spitzen (4) in den Halbleiterkörper (2) eine maximale Breite (Td) der Spitzen (4) überschreitet, sodass jede der Vielzahl von ersten Elektroden (31) des Strahlungsdetektors (1) eine der Spitzen (4) umfasst, die sich in den Halbleiterkörper (2) erstreckt, und
- elektrisches Verbinden der Spitzen (4),
wobei
der mindestens eine dotierte Bereich (6) durch Ionenimplantation gebildet wird, der dotierte Bereich (6) einer der Spitzen (4) zugeordnet ist und sich zwischen der Spitze (4) und der zweiten Elektrode (32) befindet, ein Abstand zwischen dem dotierten Bereich (6) und der Spitze (4) kleiner ist als ein Abstand zwischen dem dotierten Bereich (6) und der zweiten Elektrode (32), und eine Spitzendotierungskonzentration in dem dotierten Bereich (6) eine Spitzendotierungskonzentration benachbarter Bereiche des Halbleiterkörpers (2) um mindestens einen Faktor 5 überschreitet
und/oder
das Loch (23) für mindestens eine der Spitzen (4) so ausgebildet ist, dass die Säule (41) der mindestens einen Spitze (4) schmaler ist als der zugehörige Kopf (42), sodass die maximale Breite (Td) an dem Kopf (42) vorliegt, die Säule (41) zylindrisch oder prismatisch ist, und der Kopf (42) kreisförmig oder elliptisch ist, in einem Querschnitt entlang der jeweiligen Spitze (4) gesehen.

12. Ein Verfahren zum Betreiben des Strahlungsdetektors (1) nach einem der Ansprüche 1 bis 10,
wobei zwischen der ersten Elektrode (31) und der zweiten Elektrode (32) eine Spannung angelegt wird, sodass ein elektrisches Feld zu den Köpfen (42) der Spitzen (4) hin zunimmt,
wobei der Strahlungsdetektor (1) in einem proportionalen Lawinenmodus, unterhalb einer Durchbruchspannung oder im Geiger-Modus oberhalb einer Durchbruchspannung betrieben wird.

13. Das Verfahren gemäß dem vorhergehenden Anspruch,
wobei der Strahlungsdetektor (1) im Lawinenmodus betrieben wird, sodass ein elektrischer Hochfeldbereich, in dem ein Lawinendurchbruch auftritt, auf eine Hülle um ein Ende der Spitze (4) innerhalb des Halbleiterkörpers (2) limitiert ist, wobei dem Strahlungsdetektor (1) eine Lichtquelle (10) für Nahinfrarotstrahlung zugeordnet ist, der Strahlungsdetektor (1) Nahinfrarotstrahlung detektiert, die von der Lichtquelle (10) emittiert und von einem externen Objekt (11) reflektiert wird, um mittels einer Laufzeitmessung einen Abstand zu dem Objekt (11) zu bestimmen.

## Revendications

1. Un détecteur de rayonnement (1) comprend:
- un corps semi-conducteur (2) ayant au moins une face d'entrée de rayonnement (20),
- une pluralité de premières électrodes (31), et
- au moins une deuxième électrode (32),
dans lequel
chacune des premières électrodes (31) comprend une pointe (4) qui s'étend dans le corps semi-conducteur (2),
- chacune des pointes (4) comprend un pilier (41) et une tête (42),
- une profondeur de pénétration (Th) des pointes (4) dans le corps semi-conducteur (2) dépasse une largeur maximale (Td) des pointes (4), et
- les pointes (4) sont configurées pour collecter des porteurs de charge générés dans le corps semi-conducteur (2) par le rayonnement à détecter,
**caractérisé en ce que**
le détecteur de rayonnement (1) comprend au moins une zone dopée (6), la zone dopée (6) est associée à l'une des pointes (4) et est située entre ladite pointe (4) et la seconde électrode (32), une distance entre la zone dopée (6) et la pointe (4) est inférieure à celle entre la zone dopée (6) et la seconde électrode (32), et une concentration de dopage de crête dans la zone dopée (6) dépasse une concentration de dopage de crête de régions adjacentes du corps semi-conducteur (2) d'au moins un facteur de 5, et/ou le pilier (41) d'au moins l'une des pointes (4) est plus étroit que la tête associée (42) de telle sorte que la largeur maximale (Td) est présente au niveau de la tête (42), ledit pilier (41) est de forme cylindrique ou prismatique, et ladite tête (42) est de forme circulaire ou elliptique lorsqu'elle est vue dans une section transversale le long de la pointe respective (4).

2. Le détecteur de rayonnement (1) selon la revendication précédente,
dans lequel le pilier (41) commençant au niveau de la face d'entrée de rayonnement (20) du corps semi-conducteur (2) et la tête (42) terminant le pilier (41) à l'intérieur du corps semi-conducteur (2),
dans lequel une couche d'isolation électrique (5) étant située directement entre le pilier (41) et le corps semi-conducteur (2) de sorte que seule la tête (42) soit en contact électrique direct avec le corps semi-conducteur (2), dans lequel le pilier (41) s'étendant le long d'au moins 40 % de la pointe (4), et
dans lequel la profondeur de pénétration (Th) de ladite pointe (4) dans le corps semi-conducteur (2) dépassant une largeur maximale de la couche d'isolation (5).

3. Le détecteur de rayonnement (1) selon l'une des revendications précédentes,
dans lequel au moins une des pointes (4) se terminant dans le corps semi-conducteur (2) avec une courbure,
dans lequel un rayon de la courbure étant d'au moins 5 % et au plus 60 % de la profondeur de pénétration (Th).

4. Le détecteur de rayonnement (1) selon l'une des revendications précédentes,
dans lequel au moins l'une des pointes (4) devenant strictement plus étroite le long de la direction dans le corps semi-conducteur (2),
ladite pointe (4) se terminant dans le corps semi-conducteur (2) avec un bord et/ou un coin.

5. Le détecteur de rayonnement (1) selon l'une des revendications précédentes,
dans lequel le corps semi-conducteur (2) étant à base de silicium,
dans lequel le détecteur de rayonnement (1) étant configuré pour détecter un rayonnement à partir d'au moins une partie de la plage de longueurs d'onde de 800 nm à 980 nm inclus, dans lequel une épaisseur maximale du corps semi-conducteur (2) entre la première électrode (31) et la seconde électrode (32) étant comprise entre 1 µm et 25 µm inclus, et
dans lequel le corps semi-conducteur (2) étant pourvu d'un revêtement antireflet (7) pour le rayonnement à détecter de telle sorte qu'une proportion du rayonnement à détecter qui atteint le corps semi-conducteur (2) est augmentée.

6. Le détecteur de rayonnement (1) selon l'une des revendications précédentes,
dans lequel les pointes (4) étant en partie ou complètement d'un matériau semi-conducteur qui est différent du corps semi-conducteur (2).

7. Le détecteur de rayonnement (1) selon l'une des revendications précédentes,
dans lequel le corps semi-conducteur (2) s'étendant en continu sur les premières électrodes (31) de sorte qu'une épaisseur du corps semi-conducteur (2) entre des pointes adjacentes (4) soit constante.

8. Le détecteur de rayonnement (1) selon l'une des revendications 1 à 6,
dans lequel chacune des premières électrodes (31) ou de petits groupes de premières électrodes (31) étant entourée par des tranchées (8), le corps semi-conducteur (8) ayant une épaisseur réduite ou étant complètement retiré dans une zone des tranchées (8).

9. Le détecteur de rayonnement (1) selon l'une des revendications précédentes,
comprend des résistances de trempe (9), chacune des résistances de trempe (9) étant attribuée à l'une des premières électrodes (31),
la résistance de trempe respective (9) étant intégrée dans la pointe (4) de la première électrode attribuée (31).

10. Le détecteur de rayonnement (1) selon l'une des revendications précédentes,
dans lequel une densité des pointes (4) variant sur le corps semi-conducteur (2) lorsqu'elle est vue en vue de dessus sur la face d'entrée de rayonnement (20).

11. Un procédé au moyen duquel le détecteur de rayonnement (1) selon l'une des revendications précédentes est produit, le procédé comprend les étapes:
- fourniture d'un substrat (21) et d'au moins une seconde électrode (32), dans lequel, si le substrat (21) est fortement dopé, le substrat (21) lui-même peut servir de seconde électrode (32),
- faire croître au moins une couche semi-conductrice (22) sur le substrat (21) pour former le corps semi-conducteur (2),
- former des trous (23) au moins dans la couche semi-conductrice (22),
- former au moins une zone dopée (6) par implantation ionique, la zone dopée (6) étant associée à l'une des pointes (4) et étant située entre ladite pointe (4) et la deuxième electrode,
- remplir les trous (23) avec au moins un matériau pour former les pointes (4) qui comprennent chacune un pilier (41) et une tête (42), une profondeur de pénétration (Th) des pointes (4) dans le corps semi-conducteur (2) dépassant une largeur maximale (Td) des pointes (4) de sorte que chacune de la pluralité de premières électrodes (31) du détecteur de rayonnement (1) comprend l'une des pointes (4) qui s'étend dans le corps semi-conducteur (2), et
- connecter électriquement les pointes (4),
dans lequel
au moins une zone dopée (6) est formée par implantation ionique, la zone dopée (6) est associée à l'une des pointes (4) et est située entre ladite pointe (4) et la seconde électrode (32), une distance entre la zone dopée (6) et la pointe (4) est inférieure à celle entre la zone dopée (6) et la seconde électrode (32), et une concentration de dopage de crête dans la zone dopée (6) dépasse une concentration de dopage de crête de régions adjacentes du corps semi-conducteur (2) d'au moins un facteur de 5,
et/ou
le trou (23) pour au moins l'une des pointes (4) est formé de telle sorte que le pilier (41) de ladite au moins une pointe (4) est plus étroit que la tête associée (42) de telle sorte que la largeur maximale (Td) est présente au niveau de la tête (42), ledit pilier (41) est de forme cylindrique ou prismatique, et ladite tête (42) est de forme circulaire ou elliptique lorsqu'elle est vue dans une section transversale le long de la pointe respective (4).

12. Un procédé de fonctionnement du détecteur de rayonnement (1) selon l'une des revendications 1 à 10,
dans lequel une tension étant appliquée entre la première électrode (31) et la seconde électrode (32) de sorte qu'un champ électrique augmente vers les têtes (42) des pointes (4),
dans lequel le détecteur de rayonnement (1) fonctionnant dans un mode d'avalanche proportionnel, inférieur au claquage, ou en mode Geiger au-dessus du claquage.

13. Le procédé selon la revendication précédente,
dans lequel le détecteur de rayonnement (1) étant actionné dans le mode d'avalanche de telle sorte qu'une région de champ élevé électrique dans laquelle une rupture d'avalanche se produit est limitée à une coque autour d'une extrémité de la pointe (4) à l'intérieur du corps semi-conducteur (2), dans lequel une source de lumière (10) pour un rayonnement proche infrarouge étant attribuée au détecteur de rayonnement (1), le détecteur de rayonnement (1) détectant un rayonnement proche infrarouge émis par la source de lumière (10) et réfléchi par un objet externe (11) pour déterminer une distance par rapport à l'objet (11) au moyen d'une mesure de temps de vol.
